# EUROPEAN PATENT APPLICATION

(11) **EP 0 895 958 A2**
(43) Date of publication of application: **10.02.1999**
(21) Application number: 98660073.2
(22) Date of filing: 30.07.1998
(51) Int. Cl.: B66C 1/24, B62B 1/14

(54) **A device for handling liquid goods packages**

(30) Priority: 05.08.1997 FI 973232
(71) Applicant: Ky K. Hartwall Kb, 01150 Söderkulla (FI)
(72) Inventor: Hartwall, John, 01150 Söderkulla (FI); Aikio, Veijo, 01620 Vataa (FI)
(74) Representative: Hovi, Simo

(57) **Abstract**

The present invention relates to a handling device for liquid goods unit packages, said device comprising at least one gripping means (2) consisting of a wide-side portion (8) of said member (2) and essentially parallel members (3), which are attached close to both ends of said gripping member wide-side portion (8), essentially orthogonally thereto; all three portions (3, 8) of said gripping means including projections serving to support said package from the underside edge (9) of the package sides.

## Description

The present invention relates to a device according to the preamble of claim 1 for handling liquid goods unit packages, said device comprising a frame and, connected thereto, members used for moving said device such as wheels and handles, and gripping members for supporting said liquid goods unit packages. The packaged liquid goods suitable for handling by means of such devices include refreshments, dairy products and petrochemical industry products, for instance.

In the prior art, liquid goods packages such as refreshment bottle cases have been transferred using hand trucks and live castor/wheel skids dimensioned for beverage cases, as well as by using a lift to transfer palletized unit loads. A hand truck is a transfer device comprising a frame capable of sideways supporting liquid goods unit packages, handles in the upper part of the hand truck frame for guiding the truck, wheels under the base frame of the truck and planar nose members extending horizontally forward from the base frame of the truck. The planar nose members serve to support the liquid goods unit packages from below, that is, at the bottom of the lowermost package in the package stack. Such hand trucks have conventionally been used for the transfer of, e.g., packages of bottled/canned refreshments in retail stores. For the transfer of larger lots of liquid goods unit packages, the packages have been stacked on pallets and these have then been transferred by means of a lift, for instance, or by using live castor skids. This has been a common practice, e.g., in beverage manufacturing plants.

Prior-art techniques have been found complicated in the transfer of liquid goods unit packages off from one pallet onto another or, e.g., from a delivery truck to the storage space of a retail store. When a group of stacked liquid goods packages has been required to be moved from one place to another, a hand truck is difficult to push under the stack. Also the shelving of a batch of liquid goods unit packages on different levels in a high-bay storage has needed a separate stacking operation for each liquid goods unit package. Particularly in the beverage industry, these handling problems are accentuated when the latest types of purpose-designed liquid goods unit packages are adopted in which the quantity of packaging material and unit package footprint has been minimized. Such novel bottle packages have no side walls, and the bottles resting thereon are supported at the perimeter of their bottoms and, additionally, at their mouth/neck regions when the packages with the bottles are stacked in layers on top of one another. One type of such a bottle package is described in international patent application WO 9407758.

In the invention disclosed in cited patent publication WO 9407758, the bottle packages intended to be placed between the stacked layers of upright standing bottles have seats provided on both surfaces of the packages. On the lower surface of the package are formed seats with their inner walls by at least some portions adapted to fit supportingly about the mouth or neck regions of such bottles that are intended for use in association with said bottle package when the package is placed over the arrayed layer of bottles. Correspondingly, the dimensions and shapes of the cup-like seats on the other surface of the package, which seats are formed by the mirroring of the spaces remaining between the seats on the first surface of the package, are designed to substantially conform with the bottom shapes of the bottles intended to be used in association with said package.

It is an object of the present invention to overcome the drawbacks of the above-described techniques and to provide an entirely novel type of device for handling liquid goods unit packages.

The goal of the invention is achieved by employing a novel idea based on not lifting the package supported from the bottom side of the package, but instead using the underside of the edges of said liquid goods packages for supporting the packages during the lifting operation. Herein it must be noted that in modern bottle packages the underside of the edges is spaced at a certain distance higher than the bottom surface of the package. According to a further specification of the invention, the liquid-goods-package-supporting members are designed for easy insertion into the slot remaining between said underside of the package edge and the platform or skid supporting said package.

More specifically, the device according to the invention for handling liquid goods unit packages is characterized by what is stated in the characterizing part of claim 1.

The invention offers significant benefits. The gripping-type support device according to the invention can be brought into a proper position supporting said liquid goods transfer package and again off from said position without lifting the packages. The different embodiments of the invention make it possible to readily transfer liquid goods unit packages off from one planar platform to another, e.g., from pallets to live skids. The invention further includes embodiments facilitating the transfer of stacked liquid goods unit packages as a group and also permits their placement automatically distributed on fixed shelves. Through all its features, the invention eases the handling of liquid goods unit packages, whereby the time and costs involved in such handling are cut down by virtue of the invention. The invention also provides handling equipment with ergonomic improvements which serve to enhance work safety.

In the following, the invention will be examined in greater detail with the help of exemplifying embodiments by making reference to the appended drawings in which
Figure 1 shows in a top view a bottle package cooperating with an embodiment of the package support system according to the invention;
Figure 2 shows in a side view the bottle package and the cooperating package support system of Fig. 1;
Figures 3 - 5 show in a side, front and top view, respectively, a manual transfer device according to the invention for handling liquid goods unit packages;
Figure 6 shows the handling steps of packages using the hand-truck-type manual transfer device illustrated in Figs. 3 - 5;
Figure 7 shows in a side view an embodiment of the handling device according to the invention attached to a lift;
Figures 8 and 9 show in a partially cross-sectional front and top view, respectively, a power transfer device according to the invention;
Figure 10 shows in a side view an embodiment of the package support assembly used in the handling device illustrated in Fig. 8;
Figure 11 shows in a rear view the package support assembly of the handling device illustrated in Fig. 8;
Figure 12 shows in a top view the package support assembly of the handling device illustrated in Fig. 8; and
Figure 13 shows the worksteps associated with the use of the handling device of Fig. 8 in its operating environment

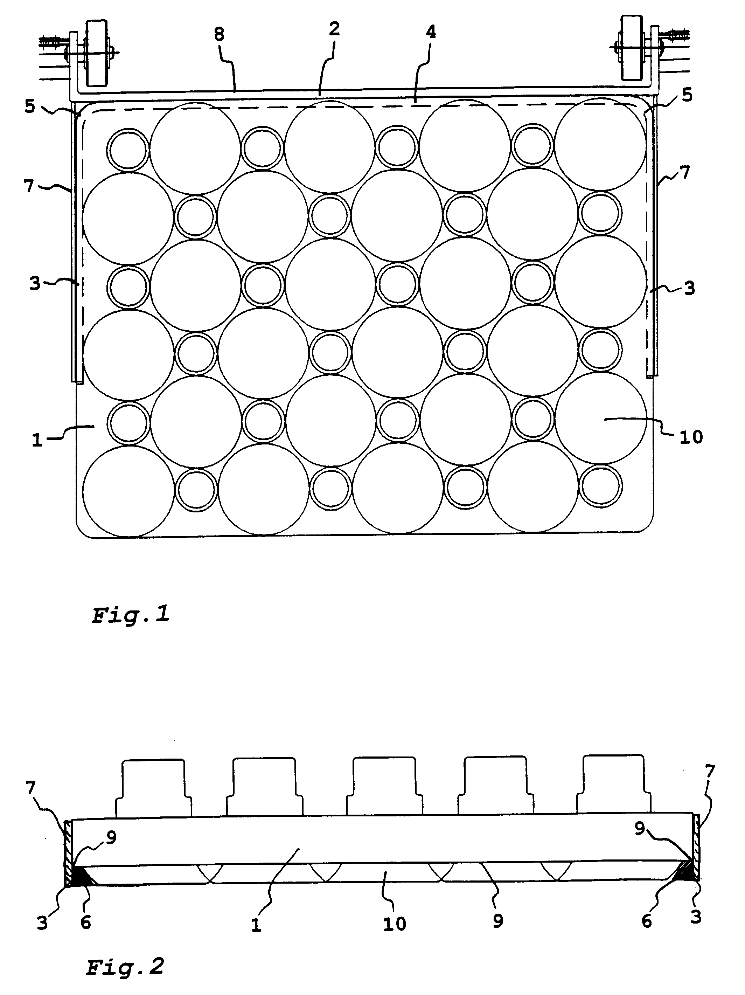

Referring to Figs. 1 and 2, therein are shown a bottle package 1 and a package support assembly 2. The package support assembly 2 comprises two essentially parallel, elongated package end support brackets 3 and a package side support 4, which with the help of corner pieces 5 joins the proximal ends of the package end support brackets 3. In the embodiment illustrated in Figs. 1 and 2, the end support brackets 3 and the side support 4 as well as the corner pieces 5 are fabricated from a single metallic strip 6 with a wedge-shaped cross section and bent into a cornered U-shape, which is fastened to support pieces 7 and a package support frame 8. In an alternative embodiment of the invention, the wedge strip 6 can be replaced, e.g., by a bar which is bent into a U-shape and supported from below as necessary.

The actual shape of the package support assembly 2 is determined by the specific requirements of the package 1. Conventionally, bottle cases and other unit goods transport packages 1 used in the handling of beverages are provided with a rabbet-type recess which is formed to the lower edges 9 of the side walls of the package so as to run in an encircling manner about the underside of the package 1, whereby this encircling bottom rabbet may be utilized, complementing the support provided to the underside 9 of the package, for supporting the package(s) 1 during its/their handling. The cross section of the end support brackets 3 and the side support members 4, respectively, is contoured so that, when the support element combination 3, 4 of the package support assembly is placed against the bottom rabbets of the wide side and end sides of the unit goods transport package 1 and the underside edge 9 thereof, the support element combination 3, 4 will reach sufficiently far under the package 1. The mutual distance between the end support brackets 3 is made substantially equal to the width of the package 1 so that, on one hand, the direct downward drop of the package 1 from the grip of the opposed end support brackets 3 is prevented and, on the other hand, the pushing of the package support assembly 2 under the package 1 and, correspondingly, the withdrawal of the support assembly 2 from under the package can take place without any effort. Along their length, the design of the end support brackets 3 is such that permits the brackets 3 to support the package 1 at points located to both sides of the center of gravity of the package 1 in the longitudinal direction of the end support brackets 3. Usually this means that the end support brackets 3 must reach at least halfway along the ends of the package 1. The function of the side support 4 is to prevent the sagging of a loaded package 1, whereby the sag could cause dropping of the package. The radius of curvature in the corner pieces 5 is advantageously made equal to the radius of curvature at the corner of the package 1 to be supported. By virtue of the above-described supporting arrangement, the inherently flexible package can be made rigidly load-bearing by almost its entire area.

In the embodiment shown in Figs. 1 and 2, the upper surface of the strip 6 of the support bracket 3 extends laterally inward up to the side of the bottle seats 10 of the bottle package 1. The inner edge of the support bracket 3 is so slanted that the lower portion of the strip 6 will extend more inwardly toward the center of the package 1 than the upper surface of the strip. The same design is applied to the side supports 4 and the corner pieces 5 which at least partially are made from the one and the same strip 6 by bending into the shapes required by the support members 4, 5, respectively. The outer side surfaces of the strip 6 not facing the bottle package 1 are provided with relatively flat end support bracket stiffeners 7 serving to increase the rigidity of the end support brackets 3 and to guide the bottle package 1 by sliding along the side faces of the package. The portion of the strip 6 attached to the side support 4 is supported by the package support frame 8 to which the strip 6 is attached by this portion.

While in the embodiment of Fig. 2 the upper surface of the strip 6 is shown to be smooth, in other embodiments this surface may be made, e.g., downward slanted in the direction of the end support bracket stiffeners 7, or alternatively, the surface may include a projection on its edge facing the bottle package 1, said projection being designed to conform with the rabbet-type recess made to encircle the underside of the bottle package 1 about its lower edges 9. These conforming contours of the mating surfaces advantageously provide an antislip effect which prevents the bottle package 1 from dropping off from the support assembly. As shown in Fig. 1, the preferred length of the end support brackets 3 in this illustrated embodiment is about two-thirds from the end side length of the bottle package 1.

The package support assembly outlined above may be adapted into a plurality of different package handling device frames to devise a variety of transfer devices suited for the handling of different types of bottle packages. Such handling device categories include hand trucks, lifts and automated power trucks, for instance. A number of feasible embodiments are described below.

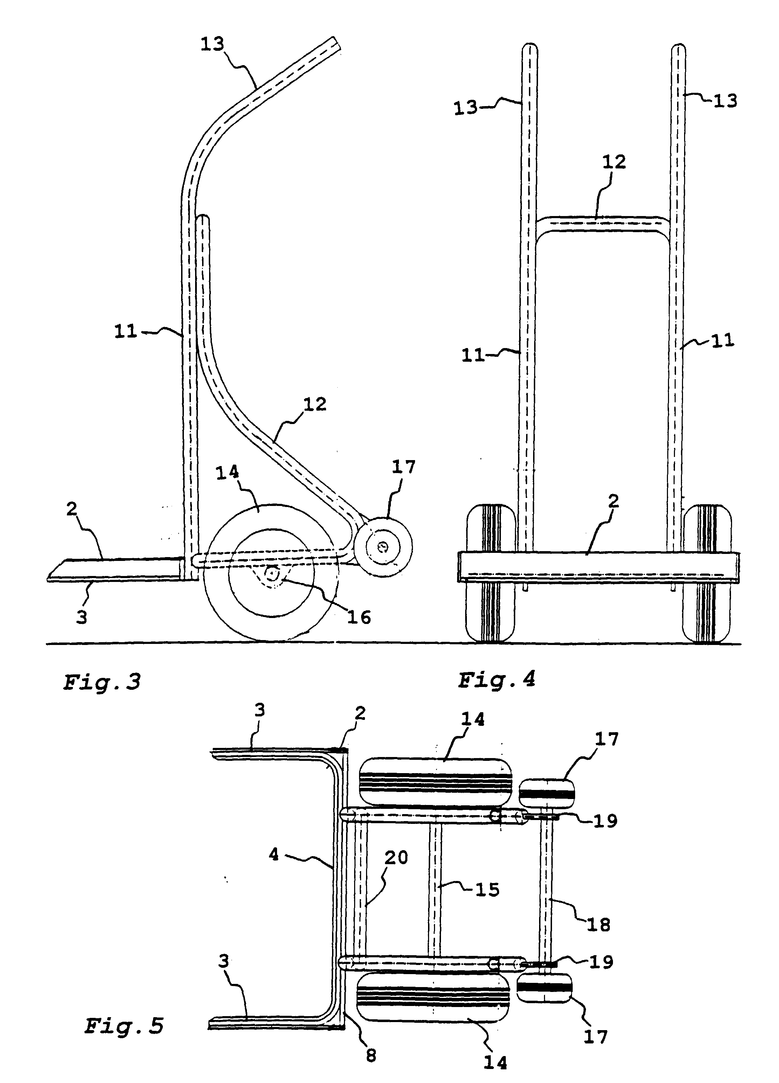

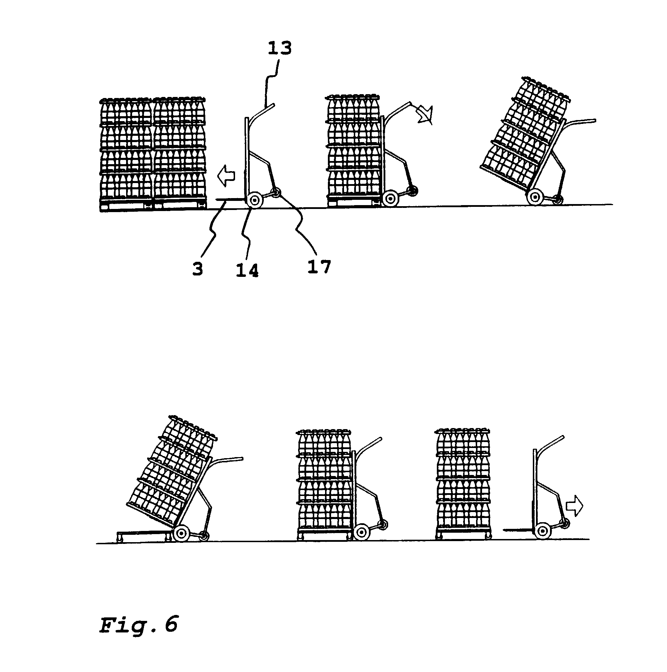

Figs. 3 - 5 show one type of a hand truck having the bottle package support 2 according to the above-described embodiment adapted thereto. Herein, the package support 2 is attached by its frame 8 to a vertical frame 11 of the hand truck, said vertical frame being comprised of two identical, parallel tubes. Said tubes are attached in the immediate vicinity of their one ends to the rear side of the package support assembly 2, equidistantly spaced from both end support brackets 3 and moreover so adapted that the vertical frame 11 and the end support brackets 3 will be orthogonally aligned in regard to each other. Then, in the manner shown in Fig. 6, the vertical frame 11 can also act as a side support when bottle packages stacked in layers are to be transferred. With regard to the configuration, the directions are in the following defined so that the attachment point of the package support assembly 2 can be said to be located on the front side of the vertical frame 11 and in the lower portion thereof.

To the rear side of said vertical frame 11 is attached a rear frame 12 made from a rigid tube in the same fashion as the vertical frame 11. The first tube of the rear frame 12 is bent into a shape in which a straight portion of the tube extends from the first end of said tube in an substantially backward directed manner from said vertical frame 11. To this portion of the tube is connected a ring 14 via a ring support 16. Next to said straight portion, the tube is bent acutely and then follows another straight portion directed essentially to the center of the vertical frame 11. To the bend remaining between these straight portions of the tube is connected an auxiliary wheel 17 mounted on its support posts 19. Next to the second straight portion, the tube of the rear frame 12 is again bent so as to continue in parallel with the tube of the vertical frame 11 and attached thereto. The rear frame 12 comprises two tubes fabricated in the above-described manner, each of the tubes attached to the respective tube of the vertical frame 11. The truck is also equipped with wheels 14 and auxiliary wheels 17 with their support posts 16, 19, whereby one of either wheel type is provided on either side of the rear frame 12.

In the embodiments of Figs. 3 - 5, the two tubes forming the rear frame 12 are made into a single length of tube by virtue of a suitable bending of the tube. Then, the single tube forming the rear frame 12 has its one end attached close to the lower end of the first tube of the vertical frame 11 and, respectively, its other end attached to the second tube of the vertical frame 11. At its center portion, the rear frame tube is bent so that the portions of the tube conforming with the shape of the vertical frame 11 are connected by a horizontal portion which simultaneously acts as a lateral brace contributing to the bending stiffness of the frame. Obviously, the design of the frame may be varied in a number of alternative constructions.

For the guidance of the hand truck, the truck is provided with handles 13. These handles 13 are adapted to the upper portion of the truck and may comprise, e.g., two lengths of tubes which are directed upward slanting backward from the rear side of the frame, whereby the handles may as well be formed by the extended ends of the tubes from which the vertical frame 11 (Figs. 3 - 5), or respectively, the rear frame (Fig. 6) is made. The hand truck illustrated in Figs. 3 - 5 also includes a shaft 15 connecting the hubs of the wheels 14 and another similar shaft 18 connecting the auxiliary wheels 17, further, a horizontal brace 20 attached to the lower portion of the frame, and more precisely, to its lower front end. Obviously, if desired, also other parts of the frame may be provided with additional members similar to the horizontal brace 20 mentioned above.

In Fig. 6 is illustrated a series of workphases associated with the transfer operation of stacked layers of bottle packages off from a pallet to a live skid using the above-described type of hand truck. As can be seen from the diagram, a preferred vertical position of the end support brackets 3 is such that, when the hand truck is resting on a floor upright supported by its wheels 14 with the end support brackets 3 aligned horizontal, the lower surface of the end support brackets 3 is located above the top surface of the pallet and, simultaneously, the upper surface of the end support bracket 3 is located slightly below the bottom rabbet of the end sides of the bottle package resting on the pallet. Then, the hand truck may be readily pushed into the position suitable for lifting the bottle packages. It is also easy to see that the position of the auxiliary wheels 17 relative to the bottle package load is advantageously such that, when both the wheels 14 and the auxiliary wheels are simultaneously making contact with the floor surface, the center of gravity of the load-truck combination is located above the area cornered by the contact points of the wheels 14 and the auxiliary wheels 17. Represented in the diagram is also a preferred shape of the handle 13.

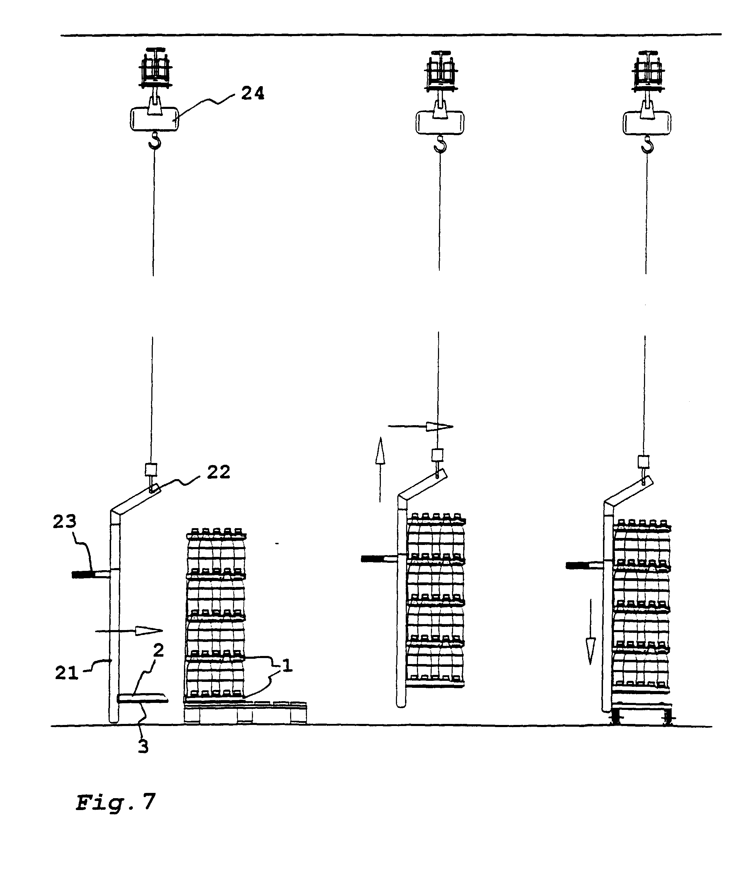

In Fig. 7 is shown an embodiment of the invention suited for use as a lift attachment. Herein, the bottle package lift attachment comprises an attachment frame 21, a support arm 22, a handle 23 and a package support assembly 2, whereby the attachment can be transferred supported by an overhead lift 24. In the embodiment of Fig. 7, the attachment frame 21 is designed into a vertically elongated metal frame or lattice which has a substantially flat structure along one horizontal axis and extends along the other horizontal axis to a width at least equal to that of the bottle package 1 to be handled. In the latter direction, that is, the wide horizontal cross-sectional direction of the attachment frame 21, the top of the frame 21 is tapered and tilted in the other, orthogonally thin, horizontal direction so as to permit the top end of the frame 21 to be shaped into a support arm 22, which extends from the vertical plane of the attachment frame 21 over the load by at least half the end side length of the package 1. Then, a correctly loaded lift attachment should not under any lifting circumstances undergo tilting with a risk of inadvertent load drop-off. The support arm 22 may include, e.g., a hole made to the attachment frame 21 or an eyelet welded thereto, thus permitting the hooking of a cable or other lifting device of the lift 24 to the attachment.

A package support assembly 2 is mounted on that wide vertical side of the lift attachment 21 into which direction the upper portion of the frame 21 is bent. The package support assembly 2 is fixed substantially orthogonal to the frame 21 and maximally at a height such that, when the bottom of the attachment frame touches the floor and the end support brackets 3 are aligned horizontal, the lower surface of the end support brackets 3 is located above the top surface of the pallet and, simultaneously, the upper surface of the end support bracket 3 is located slightly below the bottom rabbet of the end sides of the bottle package resting on the pallet. To the attachment frame 21, on the opposite side of the frame in regard to the package support assembly 2 and approximately at the height of the operator's midbody, is mounted a handle 23 serving to aid in the manual steering of the lift attachment and the load resting thereon.

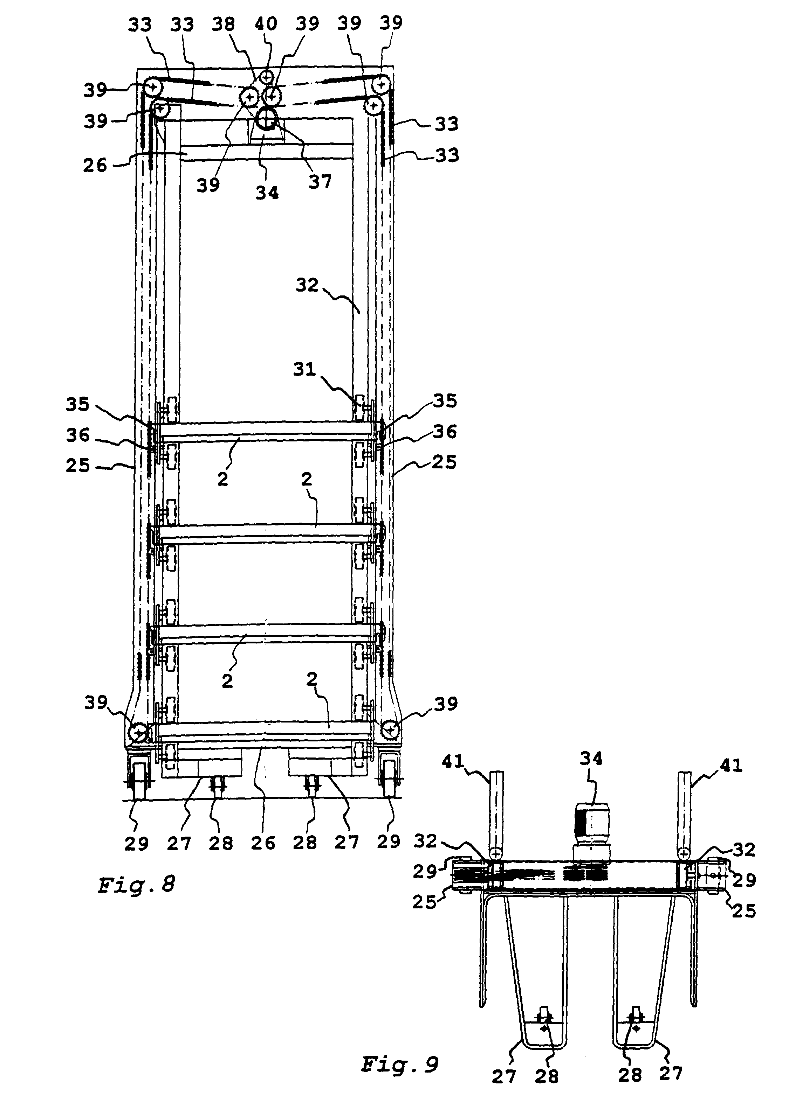

In Figs. 8 and 9 are shown the front and top views of an electric-powered embodiment of the invention. This picking truck construction is built on a high and stiff frame comprising at least two vertical columns 25 with horizontal beams 26 connected to the upper and lower ends of said vertical columns. The structure formed by the combination of these columns 25 and beams 26 may comprise a frame with a height substantially equal to, e.g., six layers of bottle packages and a width slightly greater than that of an upright standing bottle package. In addition to this frame, the body of the picking truck includes horizontal nose brackets 27 attached on the front side of the picking truck to its lowermost horizontal brace 26. In the width dimension of the truck, the shape of said nose brackets 27 must be designed such that the truck may readily be pushed under the pallet to be loaded/unloaded. The base of the truck is provided with front wheels 28 posted at the front ends of the horizontal nose brackets 27 and with rear wheels 29 posted at the lower ends of the vertical columns 25. The function of these wheels 28, 29 is to support the picking truck and to facilitate an easy movement thereof. For further ease of handling, swivel castors may be used as the front wheels 28.

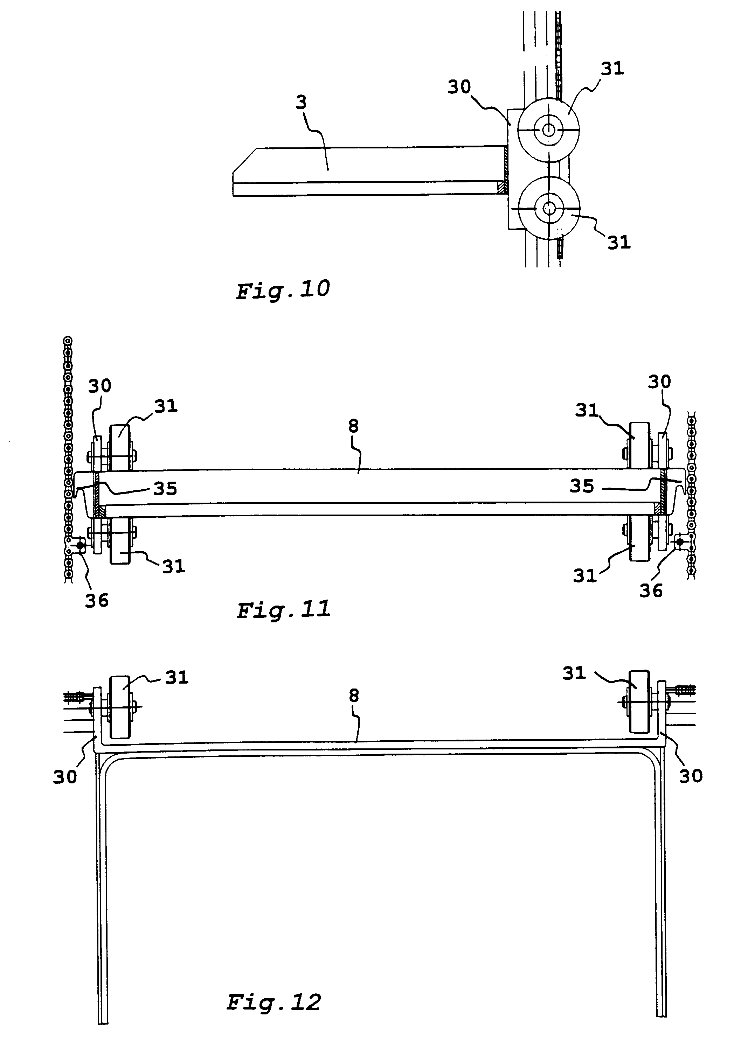

While the embodiment of the picking truck shown in Fig. 8 has four vertically adjustable package support assemblies 2, the number of the support assemblies 2 may be varied within the scope of the invention provided that the number of the assemblies is not less than one. The structure of the package support assemblies 2 is illustrated in more detail in Figs. 10, 11, 12. The body part 8 of the support assembly 2 is bent backward at its ends so that the body ends are pointing into a direction opposite to that of the end support brackets 3. The bent end portion of the support assembly body part 8, called a side plate 30, is made higher than the long part of the body 8 remaining as a horizontal brace between the vertical columns 25. On either side plate 30 of the support assembly 2 are mounted two support wheels 31, spaced at a distance from each other along an axis which is orthogonal or at least substantially orthogonal to the longitudinal axis of the end support brackets 3. To accommodate the guided rolling of these wheels 31, there are provided two, parallel, vertical guide slots 32, one slot in either of the vertical columns 25 of the picking truck frame.

The guide slots 32 are so shaped and placed that the package support assembly 2 can be adapted to move in the vertical direction along these slots 32 which guide the support wheels 31 of the assembly. The edges of the guide slots 32 are inward bent, whereby the mouth of the slot 32 becomes narrow and thus prevents the wheel 31 from laterally escaping the slot. However, the mouths of the guide slots 32 are made so wide as to permit free motion of the shafts of the wheels 31 along the slots. In the interior of the slots 32, the inner width of the slot is made such that no substantial lateral play will occur in the rolling movement of the wheels along the slots, yet permitting friction-free running of the wheels 31. Thus, the sufficiently tight matching of the support wheels 31 to the width of the guide slots 32 and the sufficiently wide vertical outdistancing of the support wheels 31 from each other can prevent undesirable swinging of the package support assembly 2, which otherwise possibly could cause tilting of the end brackets 3 with a resultant dropping of the load.

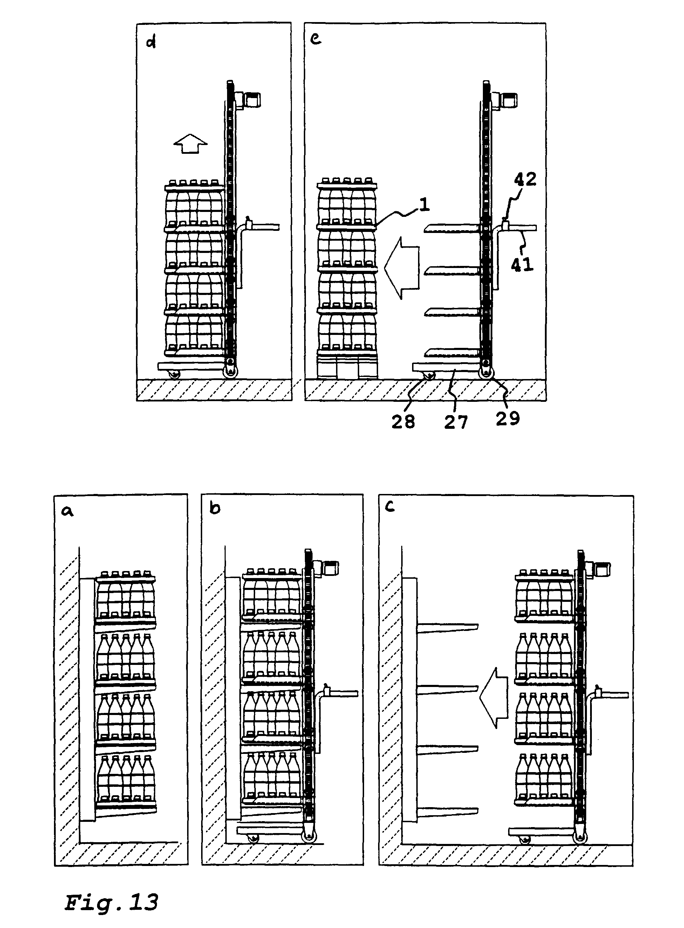

The package support assemblies 2 are placed to run above one another along the slots guide 32 of the picking truck frame, whereby a lower limit position is determined separately for each of the support assemblies 2. These are the height positions into which the support assemblies 2 will sink unless an external upward lifting force is exerted on them. As shown in Fig. 13e, the lower limit position of each support assembly must be such that the picking truck with its support assemblies in their lower limit positions can be pushed on a floor into a loading/unloading position permitting operation with a load of stacked bottle packages. This operation involves locating the upper surface of the lowermost end support bracket pair 3, which herein is lowered into its lower limit position, so as to be slightly below the end side bottom rabbet of the lowermost bottle package, whereby also each of the other end support bracket pairs 3 next above the lowermost one are respectively located below the end side bottom rabbet of their respective bottle package. Thence, the lower limit height position of the lowermost end support bracket 3 is determined by the height dimensions of the pallet and the bottle package 1. Respectively, the height positions of the other end support bracket pairs 3 in regard to the lowermost end support bracket pair 3 are determined by the mutual vertical spacing of the stacked bottle packages.

The method of controlling the package support assemblies 2 to their correct height positions during their lowering into their lower limit positions can be implemented in a plurality of different ways. One technique comprises controlling the mutual distances and positions of the support wheels 31 such that, when the support assemblies 2 are lowered into their respective lower limit positions, the lower support wheel 31 of the lowermost support assembly 2 remains resting against the lower end of the guide slot 32, while the lower and upper support wheels 31 of the support assemblies 2 located above the lowermost one remain resting successively on one another thus stopping each of the end support brackets 3 at a correct height.

Another technique, quite similar to the first one, for controlling the lower limit positions of the support assemblies comprises extending the side plates 30 past the support wheels 31 and then adapting the upper and lower edges of the extended portions of the side plates 30 to rest against each other in a similar fashion as the support wheels 31 in the above-described embodiment. When desired, the lower limit positions of the end support brackets 31 can be made adjustable by providing the lower and/or upper edges of the vertically extended side plates 30 with adjustable support blocks (not shown) fastenable in place with screws, for instance, whereby said support blocks during lowering of the package support assemblies 2 are adjusted so as to meet the abuttingly under/overlying support block of the under/overlying support assembly 2, respectively, with the exception of the lowermost support block that is stopped by the lower end of the guide slot 32. Obviously, such support blocks can simply be implemented by providing the side plates 30 with abutting bolts inserted in vertical threads made to the side plates and locked in place with lock nuts.

A third alternative technique for controlling the support assembly lower limit positions comprises providing both the vertical columns 25 and the package support assemblies 2, respectively, with such abutting stops (not shown) that prevent the lowering of each of the support assemblies 2 past a preset lower limit height. Obviously, the stops for the vertically successively moving support assemblies 2 must be displaced apart from each other in a plane orthogonal to the movement direction of the support assemblies 2 so that the stops of one support assembly 2 can only meet its dedicated counterstops and no hindrance during the elevation of assemblies will be caused to their movements from the location of the stops of the other assemblies 2.

In addition to their lower limit positions, the package support assemblies 2 must also have a predetermined lifting position and a shelving position. These positions are associated with the shelving of bottle packages on the fixed shelves of, e.g., a retail store. When the picking truck is driven into its lifting position, its package support assemblies 2 are elevated to a height at which the lower surfaces of the support assemblies 2 are located vertically slightly above the upper surfaces of the respective shelves. Then, the tiers of the picking truck can be moved in an interdigitated manner toward and above the respective tiers of the shelf system, after which the bottle packages may be readily lowered onto the respective shelves. The picking truck in its lifting position is illustrated in Figs. 13b and 13c.

The lowering of the bottle packages onto the shelves takes place by driving the picking truck into its shelving position. This is a position in which the package support assemblies are slightly lowered from their lifting positions. In the shelving position, the upper surface of each end support bracket 3 is located slightly below the bottom rabbet of the end sides of the bottle package resting on the respective shelf level and, simultaneously, the lower surface of the end support bracket 3 is located slightly above the top surface of the respective shelf. Then, the picking truck may be readily pulled away off the shelf system, whereby the bottle packages are left resting on the shelves. In an alternative design of the picking truck, the end support brackets 3 are in the shelving position lowered against the respective shelves and, during the backing of the truck off from the shelf, the end support brackets 2 are allowed to slide along the top surface of the shelves. Bottle packages thus lowered on the shelves are illustrated in Fig. 13a.

The lifting of the support assemblies 2 with the bottle packages resting thereon from the lower limit position of the assemblies into their lifting positions and the subsequent lowering thereof into the shelving position is accomplished by means of a lift mechanism. In Fig. 8 is shown a basic construction suitable for use as the lift mechanism of a four-tier embodiment of the picking truck. This embodiment of lift mechanism is based on the use of lift chains 33. The set of lift chains 33 comprises four parallel-driven chains adapted on both sides of the truck, whereby the chains 33 can be driven by means of an electric motor 34. The drive power from the chains 33 is transmitted to the package support assemblies 2 via mating hooks 35 of the support assemblies 2 and attachment lugs 36 of the chains 33. In the following, the elements of the lift mechanism are discussed in more detail.

The electric motor 34 is mounted in the upper part of the picking truck, where it is attached to the horizontal beam 26 of the truck. On the motor shaft (not shown) is mounted an output sprocket 37 serving to transmit the rotary drive power of the shaft into the linear motion of a chain 38. The chain 38 is passed over an intermediate idler sprocket 40 and over a turning sprocket 39 of a first lift chain 33. The intermediate idler sprocket 40 is a sprocket having one sector of its teeth engaging with the teeth of one of the sprockets 39 of a second lift chain 33, whereby the rotary motion of the intermediate idler sprocket 40 via said engaging teeth force said sprocket 39 to run in a reverse direction. The gearing ratio of the intermediate idler sprocket 40 to said sprocket must be such that the sprockets 39 of the first lift chain 33 are driven with an angular speed equal to that of the corresponding sprockets 39 of the second lift chain 33 but in opposite direction.

Both lift chains 33 are composed of continuous loops of quadruple-strand chains. The lift chains 33 are adapted into the frame of the picking truck so that one chain runs over idler sprockets 39 on either side of the frame. One pair of the idler sprockets 39 of the chains 39 are adapted to the upper part of the truck frame, close to the drive motor 34, whereby these idler sprockets 39 serve as a first turning point of the chain 33. The second turning point is provided by a second pair of idler sprockets 39 located to both sides of the frame, in the very lower part of the vertical columns 25. Further guidance to the path of the chains 33 is provided by a third and fourth pair of idler sprockets 39 located in the upper part of the frame, close to the upper end of the vertical columns 25. Of these third and fourth idler sprockets 39, one symmetrically located pair supports the inner leg of the chain loop 33, while the other pair supports the leg of the chain loop 33 running closer to the outer side of the frame. Thus, the sprockets 39, the drive motor 34 and the power transmission chain 37, 38, 40 make it possible to move the chains 33 so that the inner legs of the symmetrically disposed chain loops 33 running close to the ends of the package support assemblies 2 are always moved at synchronized speeds either upward or downward, respectively.

On either side of each package support assembly 2, there are provided two hooks 35 on those end sides of the support assembly 2 which face the lift chain 33. Correspondingly, the chain loop 33 includes a separate chain per each support assembly 2, said chain being arranged to run past said hook 35. The width of the hooks 35 is made narrower than the width of a single strand of the chain, whereby it is possible to align the hooks 35 of the separate support assemblies 2 to be engaged by entirely separate chain strands. Each strand of the lift chain loop 33 is provided with one lug attachment 36 suited to cooperate with the hook 35, such attachment being a loop, for instance, with a shape capable of engaging with the hook 35. Along the chain 33, these attachments 36 are so vertically spaced apart that each support assembly 2 will be individually elevated by its dedicated attachment 36 into a properly pitched lifting position of the bottle packages and moreover so that the attachments 36 acting from opposite sides on the same support assembly 2 will always move in a vertically synchronized manner. Then, the rotation of the chains 33 in one direction causes the attachments 36 to engage with the on top one another lying support assemblies 2 so that one assembly at a time is elevated by a preset vertical pitch that advantageously is equal to the shelf pitch of the storage shelf system. Rotation of the chains 33 in the opposite direction will reverse this action and permit the package support assemblies 2 to be lowered above one another pitched at vertical distances corresponding to the unit height of the bottle package.

By providing the picking truck with limit switches (not shown) serving to monitor the position of the chains 33, it is possible by means of an electric motor 34 to control the package supports 2 accurately to their lower limit positions, lifting positions and shelving positions. The power drive system is advantageously also equipped with means (not shown) serving to lock the position of the chains 33 during the transfer of the picking truck, for instance. The limit switches may be, e.g., mechanically actuated electric switches. Drive control commands to the electric supply system of the drive motor 34 may be issued, e.g., by means of a hand control 42 included in the handles 41 that are mounted to the rear side of the truck as shown in Fig. 13 and the electric power for the actuator means of the truck can be taken, e.g., from a mains outlet installed for this purpose in the vicinity of the storage shelf system.

Also the embodiments of the picking truck may be varied within the scope of the present invention. For instance, the chains 33 can be replaced by belts or cables. Instead of using an electric motor for actuating the sprockets, this can be accomplished by means of a manual cranking mechanism. Such a crank can be placed, e.g., to the rear side of the truck, approximately at the height of the operator's midbody, and the cranking ratio may be designed such that the elevation of bottle packages will be effortless. Alternatively, the entire power actuator system may be made hydraulically driven. Hereby, a hydraulic cylinder is connected by its one end to the rear edge of each package support assembly 2, while the other end of the cylinder is connected to a fixed point, e.g., the horizontal beam 26 of the truck frame. Then, the desired elevation functions can be accomplished by correctly dimensioned stroke lengths of the cylinders. Obviously, also the shape, number and mutual location of the truck components may be varied according to the requirements of each application. Moreover, the horizontal spacing of the end support brackets 3 of each support assembly 2 in the truck can be made adjustable, whereby the same support assemblies 2 can be used after a simple adjustment operation, e.g., for handling both the novel types of bottle packages and the traditional bottle cases.

## Claims

1. A handling device for liquid goods unit packages, said device comprising
- a device frame and
- at least one gripping means (2) connected to said device frame for supporting said liquid goods unit package,
**characterized** in that each one of said gripping means (2) includes
- a wide-side portion (8) of said gripping means (2), said portion including a bracket (4) arranged to support said package from the underside edge (9) of the package wide side, and
- essentially parallel members (3), which are attached close to both ends of said gripping member wide-side portion (8), essentially orthogonally thereto, said parallel members including brackets arranged to support said package from the underside edge (9) of the package end sides.

2. A handling device as defined in claim 1, **characterized** in that said brackets (3, 4), which are arranged to support said package at its underside edges (9) from both the package end sides and one wide side, comprise a single element designed to conform with the external shape of said package.

3. A handling device as defined in claim 1, **characterized** in that said device includes corner pieces (5) with a shape conforming with the external shape of said package and serving to connect the bracket (4) adapted to support said package from the underside edge (9) of the package wide side to the brackets (3) adapted to support said package from its end sides.

4. A handling device as defined in claim 1, **characterized** in that said brackets (3, 4) adapted to support said package from its underside edges (9) at its end sides or its wide side are provided on their upper surfaces with projections arranged to conform with a rabbet-type recess made to encircle the underside of the package (1), immediately about the underside edges (9) of the package (1).

5. A handling device as defined in claim 1, **characterized** in that said members (3) of the gripping means (2) adapted to support said package from the underside edge (9) of the package end sides have a length not shorter than half the end-side dimension of said package.

6. A handling device as defined in claim 1, **characterized** in that said device includes
- at least one handle (13) mounted in the upper portion of the frame (11, 12) of said device, and
- at least one set of wheels (14, 17) adapted to the lower portion of said device frame (11, 12) (Figs. 3 - 5).

7. A handling device as defined in claim 1, **characterized** in that said device includes a support arm (22) in the upper portion of said device frame (11, 12) for elevating said device by means of a lift (Fig. 7).

8. A handling device as defined in any of claims 1 - 7, **characterized** in that said gripping means (2) is adapted into the device frame in such a manner that, when the handling device is resting on an underlying plane such as a floor, the device can be positioned so that said gripping means (2) are aligned essentially horizontal and the brackets of said gripping means (2) adapted to support said package are located at a height coinciding with the slot formed between the upper surface of a pallet resting on said underlying plane and said underside edge (9) of the side of said package (1) resting on said pallet.

9. A handling device as defined in claim 1, **characterized** in that
- said gripping means (2) are adapted to move in the vertical direction in regard to the device frame (25, 26, 27), and
- said device includes lifting means (33, 35, 36) connected to said device frame (25, 26, 27) and so adapted as to move said gripping means (2) in the vertical direction (Fig. 8).

10. A handling device as defined in claim 9, **characterized** in that said lifting means (33, 35, 36) are designed to move each of said gripping means (2) during a single lifting operation by a distance which is preset separately for said gripping means (2) and independently from the preset moving distance of the other gripping means (2).

11. A handling device as defined in claim 9, **characterized** in that said lifting members (33, 35, 36) are adapted to move said gripping means (2) so as to permit stopping said gripping means (2) in at least two positions of which
- in the first position, the vertical distance between said gripping means (2) is equal to the vertical spacing of the stacked packages as measured from the underside edge of one package to the next under/overlying package, and
- in the second position, the vertical distance between said gripping means (2) is equal to the vertical spacing of the shelves in the storage shelf system used in cooperation with the handling devices used as a picking truck.
